# EUROPÄISCHE PATENTANMELDUNG

(11) **EP 0 773 690 A2**
(43) Veröffentlichungstag der Anmeldung: **14.05.1997**
(21) Anmeldenummer: 96117658.3
(22) Anmeldetag: 04.11.1996
(51) Int. Cl.: H04N 7/50

(54) **Verfahren zur Codierung eines Videodatenstroms**

(30) Priorität: 07.11.1995 DE 19541457
(71) Anmelder: SIEMENS AKTIENGESELLSCHAFT, 80333 München (DE)
(72) Erfinder: Pandel, Jürgen, Dr., 83620 Feldkirchen-Westerham (DE)

(57) **Zusammenfassung**

Bei blockbasierten Codierungsverfahren, die eine Bewegungsschätzung durchführen, werden Bewegungsvektoren (BV) zu einzelnen Bildblöcken bestimmt. Die Bewegungsvektoren (BV) werden miteinander auf Übereinstimmung überprüft. Ist die Übereinstimmung zwischen den Bewegungsvektoren (BV) groß genug, so wird die Transformationscodierung eines zu codierenden Bildblockes (BB), der dem Bildblock, dem der Bewegungsvektor (BV) zugeordnet ist, als Ergebnis der Bewegungsschätzung am besten entspricht, unterdrückt. Dadurch wird eine erhebliche Einsparung der benötigten Datenrate zur Übertragung des Videodatenstroms an den Empfänger als auch eine erhebliche Einsparung an Rechenaufwand für die Durchführung der Transformationscodierung erzielt.

## Beschreibung

In dem Gebiet der Telekommunikationstechnik, speziell in dem Bereich der Bildverarbeitung, kommt einer effizienten Codierung der Bilddaten eine immer größere Bedeutung zu. Die Codierung der Daten soll so durchgeführt werden, daß eine möglichst große Komprimierung der Information unter möglichst geringem Informationsverlust erreicht wird.

Verschiedene Verfahren zur Codierung eines Videodatenstroms sind bekannt, beispielsweise MPEG, JPEG, H.261, H.263 (Ming Liou, Overview of the px64 kbit/s Video Coding Standard, Communications of the ACM, Vol. 34, No. 4, S. 60-63, April 1991, 1991; G. Wallace, The JPEG Still Picture Compression Standard, Communications of the ACM, Vol. 34, No. 4, S. 31-44, April 1991, 1991; S. Okubo et al, International Standardization on Picture Coding, IEEE Transactions, Vol. E 74, No. 3, S. 533-538, März 1991, 1991; D. Le Gall, The Video Compression Standard for Multimedia Applications, Communications of the ACM, Vol. 34, No. 4, S. 47-58, April 1991, 1991).

Ferner ist ein blockbasiertes Bildcodierungsverfahren und eine Anordnung zur Durchführung des Verfahrens für die digitale Übertragung von HDTV-Signalen bekannt (H. Hofmann und R. Schäfer, Ein Codec für die digitale Übertragung von HDTV-Signalen, Rundfunktechnische Mitteilungen, Heft 5, S. 196 - 205, 1992).

Weiterhin ist es bekannt, abhängig von einer Bewegungssschätzung zwischen einer Intrabildcodierung und einer Interbildcodierung einzelner Bildblöcke umzuschalten (T. Ebrahimi et al, New Trends in Very Low Bitrate Video Coding, Proceedings of the IEEE, Vol. 83, No. 6, S. 877 - 891, June 1995).

Diese blockbasierten Bildcodierverfahren verwenden Prinzipien der Prädiktionscodierung und der Transformationscodierung.

Bei der Prädiktion werden Differenzbilder durch Subtraktion prädizierter Bilddaten von den zu codierenden ursprünglichen Bilddaten erzeugt.

Zur Prädiktion wird eine sogenannte bewegungskompensierte Prädiktion verwendet. Die Grundlagen der hierzu erforderlichen Bewegungsschätzung und ihre Anwendung zur bewegungskompensierten Prädiktion sind dem Fachmann bekannt (A. N. Netravali und J.D. Robbins, Motion Compensated Television Coding: Part I, Bell System Technical Journal, Vol. 58, S. 631-690, März 1979).

Zusätzlich zur bewegungskompensierten Prädiktion ist bei den genannten standardisierten Verfahren zur Codierung eines Videodatenstroms eine sogenannte bewegungskompensierte Interpolation vorgesehen. Die bewegungskompensierte Interpolation wird in Zusammenhang mit der MPEG-Terminologie auch als bidirektionle Prädiktion gezeichnet. Im Rahmen dieser Anmeldung wird jedoch der Begriff bewegungskompensierte Interpolation verwendet.

Die in den Differenzbildern vorhandenen örtlichen Korrelationen zwischen benachbarten Bildpunkten werden mit Hilfe einer geeigneten Transformation, zum Beispiel mit Hilfe der diskreten Cosinustransformation (DCT), ausgenutzt. Die verwendete Transformationscodierung liefert Transformationscodierungskoeffizienten, die einer Quantisierung und einer Entropiecodierung unterzogen werden. Anschließend werden die Transformationscodierungskoeffizienten zu einem Empfänger übertragen, bei dem das gesamte Codierungsverfahren in inverser Weise durchgeführt wird. Dadurch steht beim Empfänger nach Durchführung der Decodierung wieder direkt Information über die Bildpunkte zur Verfügung.

Bei den im vorigen beschriebenen bekannten Verfahren zur Codierung eines Videodatenstroms werden immer alle Differenzbilder einer Transformationscodierung unterzogen. Sind einzelne Blöcke als Ergebnis der Bewegungsschätzung sehr ähnlich, ergibt die zu transformierende Differenz des zu codierenden Bildblocks mit dem korrespondierenden Bildblock des vorangegangenen Bildes einen sehr kleinen Wert, der bei der Quantisierung der Transformationscodierungskoeffizienten unter Umständen zu einem diskreten Wert Null quantisiert werden kann.

Trotzdem werden die einzelnen Blöcke bei den bekannten blockbasierten Codierungsverfahren einer Transformationscodierung unterzogen, was einen unnötigen Mehraufwand bedeutet, da durch die Quantisierung sehr ähnliche Blöcke als Ergebnis einer Bewegungsschätzung ohnehin zu einem Wert Null quantisiert werden.

Der Erfindung liegt das Problem zugrunde, ein Verfahren und eine Anordnung zur Durchführung des Verfahrens anzugeben, das den Aufwand zur Codierung und Decodierung eines Videodatenstroms reduziert.

Dieses Problem wird mit dem Verfahren mit Merkmalen des Anspruches 1 und der Anordnung zur Durchführung des Verfahrens nach Patentanspruch 8 gelöst.

Die in dem Verfahren durchgeführte Bewegungsschätzung für jeden Bildblock ergibt in einem rekonstruierten Videodatenstrom jeweils zu jedem Bildblock einen Bewegungsvektor, der die Verschiebung des mit dem zu codierenden Bildblockes des Originalbildes am besten übereinstimmenden Bildblockes des Referenzbildes angibt.

Sind die Bewegungsvektoren von benachbarten Bildblöcken in dem rekonstruierten Bild, das heißt dem rekonstruierten Videodatenstrom gleich oder sehr ähnlich, so deutet dies auf einen unbewegten Hintergrund oder starre Körper hin, die möglicherweise translatorisch bewegt wurden.

Daraus ist ersichtlich, daß unter der Annahme, daß der jeweilige Bildblock tatsächlich nur translatorisch entsprechend dem ermittelten Bewegungsvektor verschoben wurde, die eigentliche Bildinformation des Bildblocks schon in dem zeitlich direkt vorangegangenen Bild enthalten ist und auch schon codiert und an den Empfänger übertragen wurde.

Eine weitere Übertragung dieses Bildblockes ist eigentlich nicht mehr notwendig und bedeutet nur zusätzliche codierte und übertragene Redundanz, was zu einer Erhöhung der benötigten Datenrate zur Übertragung des Videodatenstroms führt.

Durch das erfindungsgemäße Verfahren werden diese redundanten Bildblöcke herausgefunden, und nur die tatsächlich benötigte Information zur Wiederherstellung des zeitlich nachfolgenden Bildes, der Bewegungsvektor des redundanten Bildblockes codiert und an den Empfänger übertragen.

Auch wenn bei den bekannten Verfahren bei sehr kleinen Transformationscodierungskoeffizienten, die unter einer vorgebbaren Quantisierungsschwelle liegen nicht übertragen werden, werden durch das erfindungsgemäße Verfahren auch Transformationscodierungskoeffizienten, die über der Quantisierungsschwelle liegen auf den Wert Null gesetzt, wenn die Bildblöcke, die diese Transformationscodierungskoeffizienten enthalten bestimmte Voraussetzungen erfüllen. Dadurch wird zusätzlich Übertragungskapazität und Rechenkapazität eingespart, da für die entsprechenden Bildblöcke auch keine Transformationscodierung durchgeführt wird, sondern die Transformationscodierungskoeffizienten einfach auf den Wert Null gesetzt werden.

In der Empfängereinheit wird dann der entsprechende Block des zeitlich vorangegangenen Bildes gespeichert und ebenso für das zeitlich nachfolgende Bild verwendet, natürlich verschoben um den Wert und die Richtung des Bewegungsvektors des entsprechenden Bildblockes.

Dieses Verfahren führt einerseits zu einer erheblichen Verminderung der benötigten Datenrate bzw. die verfügbare Datenrate kann besser ausgenutzt werden, was eventuell zu deutlichen Verbesserungen der Bildqualität führt. Weiterhin ist es nunmehr nicht mehr erforderlich, für diese redundanten Bildblöcke die Transformationscodierung durchzuführen, so daß dieses Verfahren gleichzeitig eine Einsparung bezüglich des Rechenaufwandes für die Codierung des Videodatenstroms mit sich bringt.

Durch die Weiterbildung des Verfahrens gemäß Patentanspruch 2 wird ein Gütekriterium für die Übereinstimmung der Bildblöcke des vorangegangenen Bildes und des aktuell zu codierenden Videodatenstroms, also dem aktuell zu codierenden Bild, bestimmt.

Dies erfolgt durch Ermittlung der Übereinstimmung der Bildinformation des Bildblocks des rekonstruierten Videodatenstroms mit der Bildinformation des zu codierenden Datenstroms. Ist die Übereinstimmung zwischen den Bildblöcken zu gering, wird auf jeden Fall der gesamte Bildblock codiert. Dies führt zu einer Verbesserung der erreichten Bildqualität.

Weiterbildungen der Erfindung ergeben sich aus den abhängigen Ansprüchen.

Im folgenden wird die Erfindung anhand bevorzugter Ausführungsbeispiele und mit Hilfe der Figuren näher beschrieben.

Es zeigen:
- Figur 1: eine Anordnung eines Coders mit einer Steuereinheit, mit der die ermittelten Bewegungsvektoren jedes Bildblockes mit den Nachbarbewegungsvektoren des Bildblockes verglichen wird und bei genügender Übereinstimmung die Codierung des entsprechenden Bildblockes im nachfolgenden Differenzbild unterdrückt wird;
- Figur 2: ein Ablaufdiagramm, in dem einzelne Verfahrensschritte des erfindungsgemäßen Verfahrens dargestellt sind.

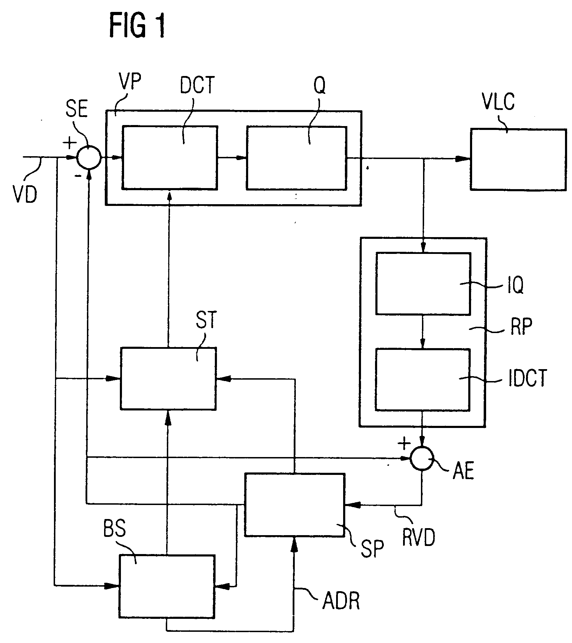

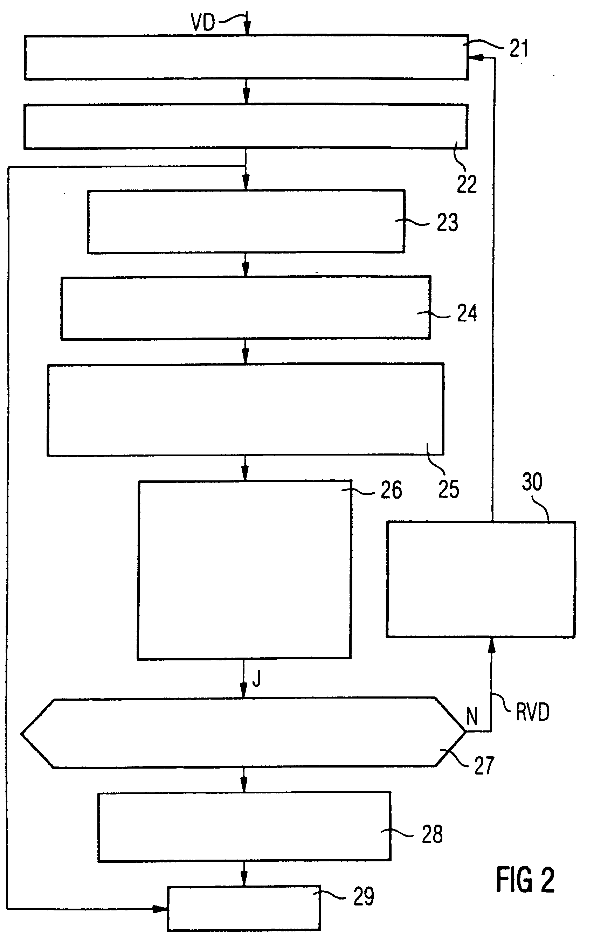

Anhand der Figuren 1 und 2 wird die Erfindung weiter erläutert.

In Figur 1 ist ein Blockdiagramm dargestellt, in dem eine Anordnung eines Coders gemäß Patentanspruch 6 beschrieben ist.

Die erfindungsgemäße Anordnung weist mindestens folgende Komponenten auf:
- ein erstes Mittel DCT zur Durchführung einer Transformationscodierung, beispielsweise einer diskreten Cosinustransformation;
- eine Quantisierungseinheit Q;
- eine inverse Quantisierungseinheit IQ;
- ein zweites Mittel IDCT zur Durchführung einer inversen Transformationscodierung;
- eine Additionseinheit AE;
- einen Speicher SP;
- ein drittes Mittel BS zur Durchführung einer Bewegungsschätzung;
- eine Steuereinheit ST; und
- eine Substraktionseinheit SE.

Hierbei bilden das erste Mittel DCT und die Quantisierungseinheit Q einen Vorwärtspfad VP.

Die inverse Quantisierungseinheit IQ sowie das zweite Mittel IDCT bilden einen Rückwärtspfad RP.

Weiterhin ist ein viertes Mittel VLC zur Durchführung einer Kanalcodierung der quantisierten Transformationskoeffizienten, möglicherweise mit einer zusätzlichen Einheit zur Fehlererkennung und/oder Fehlerkorrektur von Bit-Fehlern, vorgesehen.

Ein Ausgang der Substraktionseinheit SE ist mit einem Eingang des ersten Mittels DCT gekoppelt. Ein Ausgang des ersten Mittels DCT ist mit einem Eingang der Quantisierungseinheit Q gekoppelt. Ein Ausgang der Quantisierungseinheit Q ist mit einem Eingang der inversen Quantisierungseinheit IQ gekoppelt. Weiterhin ist der Ausgang der Quantisierungseinheit Q mit einem Eingang des vierten Mittels VLC gekoppelt. Ein Ausgang der inversen Quantisierungseinheit IQ ist mit einem Eingang des zweiten Mittels IDCT gekoppelt. Ein Ausgang des zweiten Mittels IDCT ist mit einem ersten Eingang der Additionseinheit AE gekoppelt. Ein Ausgang der Additionseinheit AE ist mit einem Eingang des Speichers SP gekoppelt. Ein Ausgang des Speichers SP ist mit einem ersten Eingang des dritten Mittels BS gekoppelt.

Ein erster Ausgang des dritten Mittels BS ist mit einem zweiten Eingang des Speichers SP gekoppelt. Mit dieser Kopplung werden Speicheradressen ADR von dem dritten Mittel BS an den Speicher übertragen. Die Speicheradressen ADR geben die von dem dritten Mittel BS benötigten Speicheradressen an.

Ferner ist ein zweiter Ausgang des dritten Mittels BS mit einem ersten Eingang der Steuereinheit ST gekoppelt. Ein zweiter Ausgang des Speichers SP ist sowohl mit einem zweiten Eingang der Subtraktionseinheit SE als auch mit einem zweiten Eingang der Additionseinheit AE gekoppelt. Ein zweiter Ausgang des Speichers SP ist mit einem zweiten Eingang der Steuereinheit ST gekoppelt. Weiterhin ist ein dritter Eingang der Steuereinheit ST mit einem weiteren Anschluß gekoppelt, an den ebenso der zu codierende Videodatenstrom VD angelegt wird.

Ferner ist das dritte Mittel BS mit einem Anschluß gekoppelt, an den der zu codierende Videodatenstrom VD angelegt wird.

Ein zu codierender Videodatenstrom VD, der aus einzelnen Bildblöcken BB besteht, wird an den ersten Eingang der Substraktionseinheit SE gelegt.

Der zu codierende Videodatenstrom VD wird außerdem an das dritte Mittel BS gelegt, wo der Videodatenstrom im Rahmen einer Bewegungsschätzung verwendet wird.

Weiterhin ist die Steuereinheit ST mit dem ersten Mittel DCT gekoppelt.

Die Bildblöcke BB des zu codierenden Videodatenstroms VD werden über die Substraktionseinheit SE in das erste Mittel DCT geführt, wo eine Transformationscodierung auf die einzelnen Bildblöcke BB des Videodatenstroms VD durchgeführt wird 21.

Das Ergebnis der Transformationscodierung sind einzelne Transformationskoeffizienten, die nun in einem weiteren Schritt 22 in der Quantisierungseinheit Q quantisiert werden.

Diese quantisierten Transformationskoeffizienten werden zum einen dem vierten Mittel VLC zugeführt, wo eine Kanalcodierung auf die quantisierten Transformationskoeffizienten angewendet wird und die codierten Daten nun an einen Empfänger übertragen werden und zum anderen der inversen Quantisierungseinheit IQ zugeführt zur Durchführung einer inversen Quantisierung zur Rekonstruktion der Transformationskoeffizienten 23.

In dem vierten Mittel kann in einer Weiterbildung des Verfahrens und der Anordnung eine Fehlererkennung und/oder Fehlerkorrektur vorgesehen sein.

Die rekonstruierten Transformationskoeffizienten, das heißt die invers quantisierten Transformationskoeffizienten, werden in dem zweiten Mittel IDCT einer inversen Transformationscodierung unterzogen zur Rekonstruktion des Videodatenstroms 24.

Da, wie im weiteren noch erläutert wird, nur Differenzbilder, das heißt nur die Differenz zweier zeitlich aufeinanderfolgender Bilder codiert wird, erhält man für diesen Fall selbstverständlich an dem Ausgang des zweiten Mittel IDCT auch nur einen rekonstruierten 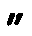 Differenzvideodatenstrom". Um einen rekonstruierten Videodatenstrom RVD zu erhalten, muß die fehlende 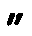 Differenzinformation" durch eine Rückkopplung des Ausgangs des zur Bewegungsschätzung verwendeten dritten Mittels BS an den zweiten Eingang der Addiereinheit AE berücksichtigt werden.

Der rekonstruierte Videodatenstrom RVD wird nun in dem Speicher SP gespeichert. Es wird jeweils üblicherweise ein gesamtes Bild in einem Speicher SP abgelegt.

Auf die in dem Speicher SP abgelegte Bildinformation, das heißt den rekonstruierten Videodatenstrom RVD, wird während der im Anschluß in dem dritten Mittel BS durchgeführten Bewegungsschätzung 25 zugegriffen.

Die Bewegungsschätzung kann auf verschiedene Arten durchgeführt werden. Eine Möglichkeit zur Durchführung der Bewegungsschätzung besteht darin, die Luminanzwerte des jeweils zu codierenden Bildblockes BB des Videodatenstroms VD mit den Luminanzwerten von sich in den rekonstruierten Bildern des rekonstruierten Videodatenstrom RVD befindenden Gebieten (Bildblöcken) zu vergleichen.

Ein mögliches Kriterium zur Bestimmung der Übereinstimmung des zu codierenden Bildblocks mit einem Gebiet derselben Form und Größe in dem rekonstruierten Videodatenstrom RVD liegt in der Bildung der absoluten Differenz der Luminanzwerte der einzelnen Bildpunkte des Bildblocks BB und dem entsprechenden Bildpunkt in dem untersuchten Gebiet des rekonstruierten Videodatenstroms RVD, also des rekonstruierten Bildes.

Weitere Kriterien, beispielsweise die Differenz der Quadrate der Luminanzwerte der einzelnen Bildpunkte der Bildblöcke oder höhere Potenzen der Luminanzwerte der einzelnen Bildpunkte der Bildblöcke sind ebenso ohne Einschränkung in dem erfindungsgemäßen Verfahren einsetzbar.

Weitere Varianten oder Alternativen der Bewegungsschätzung sind ebenso ohne Einschränkung in dem erfindungsgemäßen Verfahren verwendbar.

Abhängig von dem verwendeten Kriterium zur Bewegungsschätzung, die im vorigen beschrieben wurden, wird nun der Bildbereich des rekonstruierten Videodatenstroms RVD ausgewählt, der die größte Übereinstimmung mit dem zu codierenden Bildblock BB aufweist. Bei Verwendung der Summe der Absolutwerte der Differenzen der einzelnen Luminanzwerte der Bildpunkte der zu vergleichenden Bildblöcke ist der gewählte Bereich das Minimum der Summe der Differenzen der Luminanzwerte der einzelnen Bilpunkte der zwei verglichenen Bildblöcke.

In diesem Fall kann die Summe weiterhin als eine Übereinstimmungsgüte zwischen dem zu codierenden Bildblock DB des Videodatenstroms VD und dem durch die Bewegungsschätzung BS ermöglichten optimalen Bereich des rekonstruierten Videodatenstroms RVD verwendet werden.

Zur Bestimmung einer Rekonstruktionsgüte erfolgt ein Vergleich des rekonstruierten Bildblockes des rekonstruierten Videodatenstroms RVD mit dem entsprechenden zu codierenden Bildblock BB des Videodatenstroms VD. Dies erfolgt beispielsweise durch die Summe der Absolutwerte der Differenzen der einzelnen Luminanzwerte der Bildpunkte der zu vergleichenden Bildblöcke.

Weitere Vorgehensweisen zur Bestimmung der Rekonstruktionsgüte, beispielsweise die Differenz der Quadrate der Luminanzwerte der einzelnen Bildpunkte der Bildblöcke oder höhere Potenzen der Luminanzwerte der einzelnen Bildpunkte der Bildblöcke sind ebenso ohne Einschränkung in dem erfindungsgemäßen Verfahren einsetzbar.

In einer vorteilhaften Weiterbildung des Verfahrens wird die Transformationscodierung für den jeweiligen Bildblock BB nur unterdrückt, wenn die Rekonstruktionsgüte einen Wert überschreitet, der über einer frei wählbaren Rekonstruktionsgüteschwelle liegt.

Die Art der Bewegungsschätzung ist bei dem erfindungsgemäßen Verfahren nicht von Bedeutung. Wichtig ist nur, daß als Ergebnis der Bewegungsschätzung jedem Bildblock des zu codierenden Videodatenstroms VD ein Bewegungsvektor BV zugeordnet wird.

Der Bewegungsvektor BV beschreibt jeweils die örtliche Verschiebung innerhalb des Bildes von dem zeitlich vorangegangenen Bild zu dem aktuell zu codierenden Bild für die Bildblöcke, für die bei der Bewegungsschätzung die beste Übereinstimmung ermittelt wurde.

Nachdem mindestens zwei Bewegungsvektoren zweier benachbarter Bildblöcke durch die Bewegungsschätzung in dem dritten Mittel BS ermittelt wurden, wird nun für jeden Bewegungsvektor BV überprüft 26, ob der Bewegungsvektor BV und die Bewegungsvektoren, die Bildblöcken zugeordnet sind, die dem Bildblock, dem der zu untersuchende Bewegungsvektor BV zugeordnet ist, benachbart sind, gleich oder sehr ähnlich sind 27.

Dieser Vergleich kann beispielsweise darin bestehen, daß die absoluten Differenzen der Komponenten 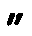 benachbarter Bewegungsvektoren" gebildet werden.

Im weiteren werden die benachbarten Bewegungsvektoren als weitere Bewegungsvektoren UBV bezeichnet und die benachbarten Bildblöcke, denen die weiteren Bewegungsvektoren UBV zugeordnet werden, werden als weiter Bildblöcke UBB bezeichnet.

In einer Weiterbildung des Verfahrens ist es vorteilhaft, auch für den Fall, daß die benachbarten weiteren Bewegungsvektoren UBV sich deutlich voneinander unterscheiden, eine weitere Überprüfung vorzunehmen, die darin besteht, zunächst die weiteren Bewegungsvektoren UBV der acht Nachbarblöcke des Bildblocks BB als in Frage kommenden Bewegungsvektor zu speichern. Für jeden der acht Verschiebungen um die gespeicherten Bewegungsvektoren wird nunmehr die Summe der Absolutwerte der Differenzen der einzelnen Luminanzwerte der Bildpunkte der zu vergleichenden Bildblöcke gebildet.

Liegt das Minimum dieser acht Summen unterhalb einer frei wählbaren Nachbarschwelle, wird der dem Minimum entsprechende Bewegungsvektor als neuer dem Bildblock BB zugeordneter Bewegungsvektor BV verwendet.

In diesem Zusammenhang sind beispielsweise folgende drei Varianten vorgesehen, welche Bildblöcke als weitere Bildblöcke UBB verwendet werden:
1. Der Vergleich der Bewegungsvektoren erfolgt jeweils nur mit örtlich, bezogen auf ein verwendetes Scanverfahren, vorangegangener Bildblöcke. In diesem Fall kann der Vergleich für jeden Bewegungsvektor BV direkt nach der Bestimmung des Bewegungsvektors durch die Bewegungsschätzung erfolgen. Dadurch wird eine bei den zwei anderen Varianten nicht zu vermeidende zeitliche Verzögerung bei der Codierung des Videodatenstroms VD vermieden.
2. Für den Fall, daß das verwendete Scanverfahren die einzelnen Bildblöcke zeilenweise 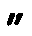 abarbeitet" und auch die Bewegungsschätzung zeilenweise die Bewegungsvektoren bestimmt, ist es in einer Variante des erfindungsgemäßen Verfahrens vorgesehen, jeweils die Bewegungsschätzung immer für die Bildblöcke einer ganzen Zeile durchzuführen und dann erst die Bewegungsvektoren BV einer Zeile mit den weiteren Bewegungsvektoren UBV der weiteren Bildblöcke UBB zu vergleichen, wenn die Bewegungsvektoren für die Bildblöcke der nachfolgenden Zeile bestimmt sind. Diese Vorgehensweise führt zwar zu einer leichten Verzögerung der Codierung des Videodatenstroms VD, bietet aber den Vorteil, daß eine größere Anzahl von Bewegungsvektoren miteinander verglichen werden können, was zu einer Verbesserung der Verläßlichkeit des Vergleichs der Bewegungsvektoren führt.
3. In einer dritten Variante werden zuerst für alle Bildblöcke eines Bildes die Bewegungsvektoren durch die Bewegungsschätzung bestimmt. Erst dann werden die Bewegungsvektoren miteinander verglichen. Die unter dem Punkt 2. angeführten Vorteile und Nachteile bleiben bei dieser Vorgehensweise in verstärktem Maße erhalten.

Es wird also ein Wert ermittelt, der die Ähnlichkeit des zu untersuchenden Bewegungsvektors mit den Bewegungsvektoren seiner 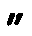 Umgebung" beschreibt.

Liegt nun dieser Wert unter dem Wert einer frei wählbaren ersten unteren Schranke 27, so wird die Transformationscodierung des aktuell zu codierenden Bildblocks BB unterdrückt 28.

Es wird dann nur der Bewegungsvektor BV selbst in dem vierten Mittel VLC kanalcodiert 29.

Der rekonstruierte Videodatenstrom RVD wird über den zweiten Eingang der Subtraktionseinheit SE an die Subtraktionseinheit SE geführt. Dort wird die Differenz zwischen dem zu codierenden Videodatenstrom VD und dem rekonstruierten Videodatenstrom RVD gebildet 30.

Die Transformationscodierung DCT wird also nur auf die Differenz zweier zeitlich aufeinanderfolgender Bilder angewendet.

Die Übereinstimmung der Bewegungsvektoren in einem zusammenhängenden Gebiet bedeutet beispielsweise, daß dieser Teil des Bildes einem bewegten Hintergrund oder auch nur einem starren Körper entspricht. Dies zeigt deutlich die Einsparung, die durch das erfindungsgemäße Verfahren erreicht wird. Es wird nämlich vermieden die Redundanz von beispielsweise sich nicht änderndem Hintergrund, der nur translatorisch von einem Bild zum anderen verschoben wurde, zu codieren und an den Empfänger zu übertragen.

Das Verfahren ist allerdings ebenso einsetzbar in Bildbereichen, die nicht starre Körper enthalten, bei allen anderen Bewegungsarten, also nicht nur bei der translatorischen Verschiebung, falls diese relativ langsam ablaufen, und bei langsamen Zoomeffekten.

In einer Weiterbildung des Verfahrens ist es vorgesehen, für jeden neuen codierten Bildblock durch Vergleich mit dem Originalbildblock eine Übereinstimmungsgüte zu ermitteln. Dies kann beispielsweise durch die Bildung einer mittleren absoluten oder auch quadratischen Differenz der einzelnen Luminanzwerte der Bildpunkte der Bildblöcke, einer maximalen absoluten Differenz oder auch Linearkombinationen davon, geschehen.

Für den Fall, daß die Übereinstimmungsgüte eine wählbare zweite untere Schranke unterschreitet, was einen unter Umständen nicht mehr hinnehmbaren Qualitätsverlust des rekonstruierten Videodatenstroms bei dem Empfänger bedeuten würde, wird bei dieser Weiterbildung der jeweilige Bildblock des Videodatenstroms VD auf jeden Fall der Transformationscodierung zugeführt und transformationscodiert.

Sowohl der Vorwärtspfad VP als auch der Rückwärtspfad RP können weitere Komponenten aufweisen, die in Figur 1 nicht dargestellt sind. Diese Komponenten sind vorgesehen zur standardmäßigen Durchführung beispielsweise von Scanverfahren, inversen Scanverfahren, einer Vektorquantisierung, einer Run-Length-Codierung oder auch einer Run-Length-Decodierung.

Diese zusätzlichen Komponenten und die dadurch zusätzlich entstandenen Verfahrensschritte, die üblicherweise in den zur Zeit standardisierten blockbasierten Codierungsverfahren eingesetzt werden, können selbstverständlich ohne Einschränkungen in dem erfindungsgemäßen Verfahren und in der erfindungsgemäßen Anordnung verwendet werden.

Da diese Verfahrensschritte zwar in den standardisierten Verfahren durchgeführt werden, aber für die eigentliche Erfindung nicht wesentlich sind, werden sie nicht weiter beschrieben.

## Patentansprüche

1. Verfahren zur Codierung eines Videodatenstroms (VD) einer aus Bildblöcken (BB) bestehenden Videosequenz,
- bei dem in einem Vorwärtspfad (VP) in einem ersten Mittel (DCT) Transformationsodierungskoeffizienten gebildet werden (21),
- bei dem in dem Vorwärtspfad (VP) in einer Quantisierungseinheit (Q) die Transformationsodierungskoeffizienten quanitisiert werden (22),
- bei dem in einem Rückwärtspfad (RP) in einer inversen Quantisierungseinheit (IQ) die quantisierten Transformationsodierungskoeffizienten einer inversen Quantisierung unterzogen werden (23),
- bei dem in dem Rückwärtspfad (RP) in einem zweiten Mittel (IDCT) eine inverse Transformationscodierung (IDCT) auf den invers quantisierten Transformationsodierungskoeffizienten ein rekonstruierter Videodatenstrom (RVD) gebildet wird (24),
- bei dem in einem dritten Mittel (BS) eine Bewegungsschätzung auf den rekonstruierten Videodatenstrom (RVD) durchgeführt wird (25),
- bei dem jedem Bildblock (BB) des rekonstruierten Videodatenstroms (RVD) als Ergebnis der Bewegungsschätzung ein Bewegungsvektor (BV) zugeordnet wird (25),
- bei dem jeder Bewegungsvektor (BV) mit weiteren Bewegungsvektoren (UBV) von weiteren Bildblöcken (UBB), die in der direkten Umgebung des jeweils untersuchten Bildblocks (BB) liegen, verglichen wird (26, 27),
- bei dem für den Fall, daß das Vergleichsergebnis der Bewegungsvektoren eine wählbare erste untere Schranke unterschreitet, nur der Bewegungsvektor (BV) des jeweils untersuchten Bildblocks (BB) einer Kanalcodierung zugeführt wird (27, 28), und
- bei dem der rekonstruierte Videodatenstrom von dem Videodatenstrom subtrahiert wird, so daß nur die Differenz des Videodatenstroms und des rekonstruierten Videodatenstroms der Transformationscodierung zugeführt wird (30).

2. Verfahren nach Anspruch 1,
- bei dem für jeden Bildblock (BB) vor der Transformationscodierung (DCT) eine Übereinstimmungsgüte zwischen jedem Bildblock des Videodatenstroms und dem entsprechenden Bildblock des rekonstruierten Videodatenstroms ermittelt wird, und
- bei dem für den Fall, daß die Übereinstimmungsgüte eine wählbare zweite unter Schranke unterschreitet, der jeweilige Bildblock des Videodatenstroms auf jeden Fall der Transformationscodierung zugeführt wird.

3. Verfahren nach Anspruch 1 oder 2,
bei dem als die weiteren Bewegungsvektoren (UBV) jeweils Bewegungsvektoren örtlich vorangegangener Bildblöcke verwendet werden.

4. Verfahren nach einem der Ansprüche 1 bis 3,
bei dem als die weiteren Bewegungsvektoren (UBV) jeweils Bewegungsvektoren verwendet werden, die Bildblöcken zugeordnet sind, die sich auf der vorangegangenen, derselben und der nachfolgenden Zeile befinden wie der Bildblock des jeweils untersuchten Bewegungsvektors (BV).

5. Verfahren nach einem der Ansprüche 1 oder 2,
- bei dem vor dem Vergleich der Bewegungsvektoren alle Bewegungsvektoren eines Bildes ermittelt werden,
- bei dem mindestens die Bewegungsvektoren der an den jeweils untersuchten Bildblock (BB) direkt angrenzenden Bildblöcke als die weiteren Bewegungsvektoren (UBV) verwendet werden.

6. Verfahren nach einem der Ansprüche 1 bis 5,
- bei dem für jeden Bildblock (BB) nach der Rekonstruktion des Bildblocks eine Rekonstruktionsgüte zwischen jedem Bildblock des rekonstruierten Videodatenstroms (RVD) und dem entsprechenden Bildblock des zu codierenden Videodatenstroms (VD) ermittelt wird, und
- bei dem für den Fall, daß die Rekonstruktionsgüte eine wählbare Rekonstruktionsgüteschwelle unterschreitet, der jeweilige Bildblock (BB) des Videodatenstroms (VD) auf jeden Fall der Transformationscodierung (DCT) zugeführt wird.

7. Verfahren nach einem der Ansprüche 1 bis 6,
bei dem für den Fall von zwei sich deutlich unterscheidenden verglichenen Bewegungsvektoren dem Bewegungsvektor (BV), der dem Bildblock (BB) zugeordnet wird, der Wert des weiteren Bewegungsvektors (UBV) zugeordnet wird, dessen Summe der Absolutwerte der Differenzen der Luminanzwerte kleiner ist als die entsprechenden Summen aller anderen Verschiebungen des Bildblocks (BB) um die anderen weiteren Bewegungsvektoren (UBV).

8. Anordnung zur Codierung eines aus Bildblöcken (BB) bestehenden Videodatenstroms,
- bei dem ein erstes Mittel (DCT) zur Durchführung einer Transformationscodierung vorgesehen ist,
- bei dem eine mit einem Ausgang des ersten Mittels (DCT) gekoppelte Quantisierungseinheit (Q) vorgesehen ist,
- bei dem ein mit einem Ausgang der Quantisierungseinheit (Q) gekoppelte inversen Quantisierungseinheit (IQ) vorgesehen ist,
- bei dem ein mit einem Ausgang der inversen Quantisierungseinheit (IQ) gekoppeltes zweites Mittel (IDCT) vorgesehen ist zur inversen Transformationscodierung der invers quantisierten Transformationskoeffizienten,
- bei dem eine mit einem Ausgang des zweiten Mittels (IDCT) gekoppelte Additionseinheit (AE) vorgesehen ist,
- bei dem ein mit einem Ausgang der Additionseinheit (AE) gekoppelter Speicher (SP) vorgesehen ist,
- bei dem ein mit einem Ausgang des Speichers (SP) gekoppeltes drittes Mittel (BS) zur Bewegungsschätzung der Bildblöcke (BB) vorgesehen ist,
- bei dem eine Steuerungseinheit (ST) vorgesehen ist zum Vergleichen von Bewegungsvektoren (BV), die als Ergebnis der Bewegungsschätzung den einzelnen Bildblöcken (BB) zugeordnet sind, und
- bei dem eine Subtraktionseinheit (SE) vorgesehen ist, deren erster Eingang vorgesehen ist zur Aufnahme des Videodatenstroms, deren zweiter Eingang vorgesehen ist zur Aufnahme des rekonstruierten Videodatenstroms und deren Ausgang mit einem Eingang des ersten Mittels (DCT) gekoppelt ist.
